# EUROPÄISCHE PATENTSCHRIFT

(11) **EP 2 665 634 B1**
(45) Veröffentlichungstag und Bekanntmachung des Hinweises auf die Patenterteilung: **21.02.2018**
(21) Anmeldenummer: 11802670.7
(22) Anmeldetag: 05.12.2011
(51) Int. Cl.: B60W 40/08, B60K 28/06, B60W 50/16, B60K 28/04

(54) **VERFAHREN UND VORRICHTUNG ZUR ÜBERWACHUNG DER KÖRPERHALTUNG EINES MOTORRADFAHRERS**
METHOD FOR MONITORING THE BODY POSTURE OF A MOTORCYCLIST
PROCÉDÉ DE CONTRÔLE DE LA POSITION CORPORELLE D'UN MOTOCYCLISTE

(30) Priorität: 20.01.2011 DE 102011002920
(43) Veröffentlichungstag der Anmeldung: 27.11.2013
(73) Patentinhaber: Robert Bosch GmbH, 70442 Stuttgart (DE)
(72) Erfinder: OETTGEN, Oliver, 71717 Beilstein (DE)
(86) Internationale Anmeldenummer: PCT/EP2011/071760
(87) Internationale Veröffentlichungsnummer: WO 2012/097909

(56) Entgegenhaltungen:
- DE-A1-102004 033 487
- DE-A1-102006 056 094
- US-A- 5 690 186
- US-A1- 2009 174 560
- US-A1- 2010 204 874

## Beschreibung

### Stand der Technik

Die Erfindung betrifft ein Verfahren zur Verbesserung der Sicherheit beim Motorradfahren.
Im Straßenverkehr kommt es immer wieder zu Unfällen wegen Unaufmerksamkeit oder mangelnder Verkehrstüchtigkeit des Fahrers. Typische Ursachen für solche Unfälle sind beispielsweise starke Müdigkeit bis hin zu Sekundenschlaf, eine gesundheitliche Beeinträchtigung, wie zum Beispiel Unterzuckerung, oder eine starke emotionale Belastung des Fahrers. Motorradfahrer sind durch Übermüdung oder mangelnde Aufmerksamkeit besonders stark gefährdet.
Beim Motorradfahren spielt neben der körperlichen Verfassung des Fahrers aber auch die richtige Körperhaltung eine Rolle. Verlässt der Fahrer eine verkehrsgerechte Körperhaltung und fährt z. B. freihändig, kann er sich selbst und andere Verkehrsteilnehmer gefährden.

Die DE 10 2006 056 094 A zeigt eine Überwachung der Körperhaltung eines Fahrers. Sobald dieser längere Zeit von einer vorgegebenen Haltung abweicht, erfolgt eine Warnung.

### Offenbarung der Erfindung

Es ist daher Aufgabe der vorliegenden Erfindung, ein System zu schaffen, mit dem die Sicherheit beim Motorradfahren verbessert werden kann.
Gelöst wird diese Aufgabe gemäß der Erfindung durch die im Patentanspruch 1 angegebenen Merkmale. Weitere Ausgestaltungen der Erfindung sind Gegenstand von Unteransprüchen.

Gemäß der Erfindung wird vorgeschlagen, mittels einer Sensorik zu überwachen, ob ein Motorradfahrer eine vorgegebene Körperhaltung einnimmt. Wenn festgestellt wird, dass der Motorradfahrer länger als eine vorgegebene Zeitdauer von der vorgegebenen Körperhaltung abweicht, wird ein Signalgeber aktiviert, um den Fahrer zu warnen. In der Praxis hat sich nämlich gezeigt, dass Motorradfahrer bei Müdigkeitserscheinungen gelegentlich Entspannungsbewegungen durchführen, wie z.B. Aufstehen während der Fahrt, Gewichtsverlagerungen auf der Sitzbank, einhändiges oder freihändiges Fahren, Durchstrecken der Beine oder Verlagerung der Füße weg von den vorgesehenen Fußrasten. In diesen Phasen sind die Beherrschbarkeit des Motorrads und somit auch die Fahrsicherheit herabgesetzt. Durch eine Überwachung der Körperhaltung und Signalisierung bei Verlassen der richtigen Körperhaltung wird der Motorradfahrer darauf aufmerksam gemacht, dass er von einer verkehrssicheren Körperhaltung abweicht. Er kann in diesem Fall die verkehrssichere Haltung wieder einnehmen oder, wenn er dies will, eine Pause einlegen.

Gemäß einer bevorzugten Ausführungsform der Erfindung wird als Sensorik eine Kontakt- und/oder Kraftsensorik verwendet. Diese Sensorik kann sehr einfach an verschiedenen Stellen des Motorrads oder der Ausrüstung des Motorradfahrers eingebaut oder angebracht werden. Darüber hinaus kann mittels dieser Sensorik sehr einfach erfasst werden, ob der Fahrer eine verkehrssichere Körperhaltung einnimmt.

Die vorgegebene Körperhaltung ist prinzipiell eine Haltung, in der der Fahrer eine gute Kontrolle über das Motorrad hat und schnell reagieren kann. Sie kann z. B. durch wenigstens eines der folgenden Merkmale charakterisiert sein: eine bestimmte Sitzposition des Fahrers, eine vorgegebene gleichmäßige Gewichtsverteilung auf der Sitzbank, eine Hand bzw. beide Hände des Fahrers befinden sich an den Griffen des Lenkers, ein Fuß bzw. beide Füße des Fahrers haben Kontakt zu den Fußrasten des Motorrad und/oder der Fahrer hat keinen Kontakt zu vorgegebenen Stellen des Motorrads. Prinzipiell können aber auch andere Körperhaltungen als Soll-Körperhaltung vorgegeben werden.

Gemäß einer bevorzugten Ausführungsform gibt der Signalgeber ein optisches und/oder akustisches und/oder ein haptisch wahrnehmbares Signal an den Fahrer aus.

Der Signalgeber kann z. B. Vibrationen an einer Motorradkomponente oder an der Motorradausrüstung des Fahrers, wie z.B. dem Motorradanzug erzeugen. Alternativ oder zusätzlich kann ein Leuchtelement ein optisches Signal ausgeben. Das Leuchtelement kann z.B. am Cockpit des Motorrads, am Helm des Fahrers oder an einer anderen Komponente des Motorrades oder der Ausrüstung des Motorradfahrers angebracht sein. Eine alternative oder zusätzliche Möglichkeit ist die Ausgabe eines Signals über einen Lautsprecher, welcher sich z. B. im Helm des Fahrers befinden kann, Teil einer Freisprecheinrichtung sein und/oder an einer anderen Komponente des Motorrads oder des Zubehörs angebracht sein kann. Somit kann die Form der Signalausgabe verschiedenen individuellen Bedürfnissen und verschiedenen Motorrädern und Motorradausrüstungen angepasst werden.

Gemäß einer bevorzugten Ausführungsform werden Vibrationen am Gasgriff, am Bremsgriff, an den Fußrasten, an der Sitzbank, in den Motorradhandschuhen, am Motorradanzug und/oder am Helm des Motorradfahrers erzeugt. Vibrationsmechanismen können sowohl am Motorrad wie auch am Zubehör integriert werden.

Der Signalgeber wird, insbesondere wenn er am Helm oder der Bekleidung angebracht ist, vorzugsweise über eine Funkschnittstelle, wie zum Beispiel Bluetooth, aktiviert.

Die genannte Zeitdauer, die der Fahrer von der vorgegebenen Körperhaltung abweichen darf, bevor ein Warnsignal erzeugt wird, kann je nach Art der Abweichung unterschiedlich lang sein. Es kann z. B eine Zeitdauer zwischen 0 s und mehreren Sekunden erlaubt sein. Gemäß einer Ausführungsform der Erfindung kann z. B. vorgesehen sein, dass der Fahrer seine Hand maximal 3 s lang vom linken Handgriff, aber nur 1 s lang vom Bremsgriff (rechten Handgriff) lösen darf, bevor der Signalgeber aktiviert wird, während das Lösen beider Hände vom Lenker unmittelbar zu einer Aktivierung des Signalgebers führt.

Die vorgegebene Zeitdauer ist erfindungsgemäß von einer Betriebsgröße des Motorrads, Verkehrsdaten, Wetterdaten und/oder von Daten über die vorausliegende Strecke abhängig. Bei der Betriebsgröße des Motorrads kann es sich z.B. um die Fahrgeschwindigkeit handeln. Auf diese Weise kann zum Beispiel bei höherer Fahrgeschwindigkeit die vorgegebene Zeitdauer kürzer eingestellt werden als bei niedriger Geschwindigkeit. Das Warnsystem kann deaktiviert werden, wenn sich das Motorrad im Stillstand befindet. Steht der Fahrer z.B. mit dem Motorrad vor einer roten Ampel, kann er beide Hände vom Lenker nehmen, ohne dass der Signalgeber aktiviert wird.

Eine erfindungsgemäße Vorrichtung umfasst vorzugsweise ein Steuergerät mit einem Algorithmus zur Überwachung der Körperhaltung eines Motorradfahrers. Der Algorithmus verarbeitet die Signale einer zugehörigen Sensorik und ermittelt daraus, ob der Motorradfahrer die vorgegebene Körperhaltung einnimmt. Stellt der Algorithmus fest, dass der Motorradfahrer während einer vorgegebenen Zeitdauer von der vorgegebenen Körperhaltung abweicht, wird ein Signalgeber aktiviert.

Die Erfindung wird nachstehend anhand der beigefügten Zeichnung beispielhaft näher erläutert. Es zeigt:

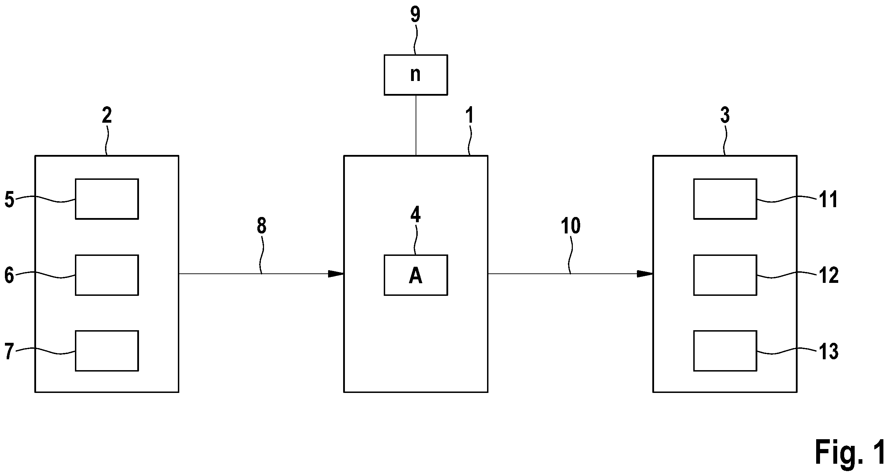

- Fig. 1: eine schematische Blockdarstellung eines Verfahrens zur Überwachung einer vorgegebenen Körperhaltung eines Motorradfahrers.

Figur 1 zeigt eine schematische Darstellung eines Systems zur Überwachung einer vorgegebenen Körperhaltung eines Motorradfahrers. Das System umfasst eine Sensorik 2 zum Überwachen, ob der Motorradfahrer eine vorgegebene Körperhaltung einnimmt, ein daran angeschlossenes Steuergerät 1 mit einem Algorithmus 4 und einen Signalgeber 3. Die Sensorsignale der Sensorik 2 werden vom Algorithmus 4 verarbeitet und ausgewertet. Wenn festgestellt wird, dass der Motorradfahrer länger als eine vorgegebene Zeitdauer von einer vorgegebenen Körperhaltung abweicht, aktiviert das Steuergerät 1 den Signalgeber 3 über eine Datenverbindung 10.

Die Sensorik 2 umfasst im dargestellten Beispiel mehrere Druck- oder Kraftsensoren 5, die an der Sitzbank des Motorrads angeordnet sind, Kontaktsensoren 6 an den Griffen des Lenkers und Kontaktsensoren 7 an den Fußrasten des Motorrads. Die Kraftsensoren 5 messen an verschiedenen Positionen auf der Sitzbank, welche Kraft an der jeweiligen Position auf die Sitzbank ausgeübt wird. Dadurch kann die Sitzposition bzw. eine Veränderung der Gewichtsverteilung erkannt werden. Die Kontaktsensoren 6 erkennen, ob sich die Hände des Fahrers an den Griffen befinden. Die Kontaktsensoren 7 an den Fußrasten erkennen, ob die Füße des Fahrers auf den Fußrasten platziert sind oder nicht. Die von der Sensorik 2 ermittelten Daten werden über eine Datenverbindung 8 an das Steuergerät 1 übermittelt.

Der Signalgeber 3 umfasst im dargestellten Ausführungsbeispiel ein Vibrationsmodul 11 an den Fußrasten und/oder ein Vibrationsmodul 12 an der Sitzbank, sowie ein Leuchtelement 13 im Helm des Motorradfahrers. Prinzipiell können auch mehr oder weniger Signalgeber 11 bis 13 vorgesehen sein.

Die Funktion des in Fig. 1 dargestellten Systems wird im Folgenden nochmals anhand verschiedener Beispiele erläutert. Streckt der Motorradfahrer z. B. beide Beine aus und berührt folglich die Fußrasten nicht mehr, werden z.B. das Vibrationsmodul 12 an der Sitzbank und das Leuchtelement 13 im Helm des Motorradfahrers aktiviert. Steht der Motorradfahrer während der Fahrt auf und bleibt mehrere Sekunden lang stehen, werden z. B. das Vibrationsmodul 11 an den Fußleisten und das Leuchtelement 13 im Helm des Motorradfahrers aktiviert.

Die eingangs genannte Zeitdauer, die der Fahrer von der vorgegebenen Haltung abweichen darf, kann abhängig von einer Betriebsgröße des Motorrads, z. B. der Geschwindigkeit, sein. Die Geschwindigkeit wird hier aus dem Signal eines Rad-Drehzahlsensors 9 ermittelt. Nimmt der Fahrer eine Hand vom Lenker, während das Motorrad beispielsweise 25 km/h schnell fährt, wird der Signalgeber 3 erst nach 4s aktiviert, während er bei 60 km/h bereits nach 2s aktiviert wird.

## Patentansprüche

1. Verfahren zur Verbesserung der Sicherheit beim Motorradfahren, **dadurch gekennzeichnet, dass** mittels einer Sensorik (2) überwacht wird, ob ein Motorradfahrer eine vorgegebene Körperhaltung einnimmt, und ein Signalgeber (3) aktiviert wird, wenn festgestellt wird, dass der Motorradfahrer länger als eine vorgegebene Zeitdauer von der vorgegebenen Körperhaltung abweicht, wobei die vorgegebene Zeitdauer von einer Betriebsgröße des Motorrads, Verkehrsdaten, Wetterdaten und/oder von Daten über die vorausliegende Strecke abhängig ist.

2. Verfahren nach Anspruch 1, **dadurch gekennzeichnet, dass** die Sensorik (2) einen Kontakt- und/oder Kraftsensor umfasst.

3. Verfahren nach Anspruch 1 oder 2, **dadurch gekennzeichnet, dass** die vorgegebene Körperhaltung wenigstens durch eines der folgenden Merkmale charakterisiert ist: eine vorgegebene Sitzposition des Fahrers, eine vorgegebene Gewichtsverteilung auf der Sitzbank, eine Hand oder beide Hände des Fahrers befinden sich an den Griffen des Lenkers, ein Fuß oder beide Füße des Fahrers haben Kontakt zu den Fußrasten des Motorrads, der Fahrer hat keinen Kontakt zu vorgegebenen Stellen des Motorrads, die Beine des Fahrers nehmen eine vorgegebene Stellung ein.

4. Verfahren nach einem der vorhergehenden Ansprüche, **dadurch gekennzeichnet, dass** der Signalgeber (3) ein haptisches, optisches und/oder akustisches Signal an den Fahrer ausgibt.

5. Verfahren nach einem der vorhergehenden Ansprüche, **dadurch gekennzeichnet, dass** der Signalgeber (3) Vibrationen an einer Motorradkomponente oder an der Motorradausrüstung des Fahrers, ein optisches Signal im Cockpit oder an einer anderen Komponente des Motorrads oder der Ausrüstung des Fahrers, ein akustisches Signal im Helm, über eine Freisprecheinrichtung und/oder eine andere Komponente des Motorrads ausgibt.

6. Verfahren nach einem der vorhergehenden Ansprüche, **dadurch gekennzeichnet, dass** der Signalgeber (3) Vibrationen am Gasgriff, am Bremsgriff, an den Fußrasten, an der Sitzbank, in den Motorradhandschuhen, am Motorradanzug, und/oder am Helm erzeugt.

7. Verfahren nach einem der vorhergehenden Ansprüche, **dadurch gekennzeichnet, dass** der Signalgeber (3) über eine Funkschnittstelle, z.B. via Bluetooth aktiviert wird.

8. Verfahren nach Anspruch 3, **dadurch gekennzeichnet, dass** die vorgegebene Zeitdauer für die maximale Abweichung von verschiedenen Merkmalen der vorgegebenen Körperhaltung unterschiedlich lang sein kann.

9. Steuergerät (1) zur Durchführung eines Verfahrens nach einem der vorhergehenden Ansprüche, **gekennzeichnet durch** einen Algorithmus (4), der die Signale einer Sensorik (2) verarbeitet und feststellt, ob ein Motorradfahrer eine vorgegebene Körperhaltung einnimmt, und der einen Signalgeber (3) aktiviert, wenn festgestellt wurde, dass der Motorradfahrer die vorgegebene Körperhaltung länger als eine vorgegebene Zeitdauer verlässt, wobei die vorgegebene Zeitdauer von einer Betriebsgröße des Motorrads, Verkehrsdaten, Wetterdaten und/oder von Daten über die vorausliegende Strecke abhängig ist.

## Claims

1. Method for improving the safety in motorcycling, **characterized in that** by means of sensors (2), monitoring is carried out to see whether a motorcyclist assumes a predefined body posture, and a signal transmitter (3) is activated if it is determined that the motorcyclist deviates from the predefined body posture for longer than a predefined time period, wherein the predefined time period depends on an operating variable of the motorcycle, traffic data, weather data and/or on data about the route ahead.

2. Method according to Claim 1, **characterized in that** the sensors (2) comprise a contact and/or force sensor.

3. Method according to Claim 1 or 2, **characterized in that** the predefined body posture is characterized at least by one of the following features: a predefined sitting position of the rider, a predefined weight distribution on the seat, one hand or both hands of the rider are on the grips of the handlebars, one foot or both feet of the rider have contact with the footrest of the motorcycle, the rider has no contact with predefined points of the motorcycle, the legs of the rider assume a predefined position.

4. Method according to one of the preceding claims, **characterized in that** the signal transmitter (3) outputs a haptic, optical and/or acoustic signal to the rider.

5. Method according to one of the preceding claims, **characterized in that** the signal transmitter (3) outputs vibrations on a motorcycle component or on the motorcycle gear of the rider, an optical signal in the cockpit or on another component of the motorcycle or the gear of the rider, an acoustic signal in the helmet, via a hands-free facility and/or another component of the motorcycle.

6. Method according to one of the preceding claims, **characterized in that** the signal transmitter (3) generates vibrations on the throttle grip, on the brake grip, on the foot rests, on the seat, in the motorcycle gloves, on the motorcycle suit and/or on the helmet.

7. Method according to one of the preceding claims, **characterized in that** the signal transmitter (3) is activated via a radio interface, e.g. via Bluetooth.

8. Method according to Claim 3, **characterized in that** the predefined time period for the maximum deviation from various features of the predefined body posture can be of different lengths.

9. Control device (1) for carrying out a method according to one of the preceding claims, **characterized by** an algorithm (4), which processes the signals from sensors (2) and determines whether a motorcyclist assumes a predefined body posture, and which activates a signal transmitter (3) if it has been determined that the motorcyclist leaves the predefined body posture for longer than a predefined time period, wherein the predefined time period depends on an operating variable of the motorcycle, traffic data, weather data and/or on data about the road ahead.

## Revendications

1. Procédé d'amélioration de la sécurité lors de la conduite de motocyclettes, **caractérisé en ce qu'**une surveillance est effectuée au moyen d'un système de détection (2) afin de vérifier si un conducteur de motocyclette adopte une posture prédéfinie, et un transmetteur de signal est activé (3) lorsqu'il est constaté que le conducteur de motocyclette s'écarte de la posture prédéfinie pendant plus longtemps qu'une durée prédéfinie, la durée prédéfinie étant dépendante d'une grandeur opérationnelle de la motocyclette, de données de trafic, de données météorologiques et/ou de données à propos du trajet à venir.

2. Procédé selon la revendication 1, **caractérisé en ce que** le système de détection (2) comprend un détecteur de contact et/ou de fore.

3. Procédé selon la revendication 1 ou 2, **caractérisé en ce que** la posture prédéfinie est **caractérisée par** au moins l'une des caractéristiques suivantes : une position assise prédéfinie du conducteur, une distribution du poids prédéfinie sur la selle, une main ou les deux mains du conducteur se trouvent sur les poignées du guidon, un pied ou les deux pieds du conducteur sont en contact avec les repose-pieds de la motocyclette, le conducteur n'a aucun contact avec des endroits prédéfinis de la motocyclette, les jambes du conducteur adoptent une position prédéfinie.

4. Procédé selon l'une des revendications précédentes, **caractérisé en ce que** le transmetteur de signal (3) délivre un signal haptique, visuel et/ou sonore au conducteur.

5. Procédé selon l'une des revendications précédentes, **caractérisé en ce que** le transmetteur de signal (3) délivre des vibrations à un composant de la motocyclette ou à l'équipement de motard du conducteur, un signal visuel dans le poste de conduite ou sur un autre composant de la motocyclette ou à l'équipement du conducteur, un signal sonore dans le casque, par le biais d'un appareil de conversation mains libres et/ou d'un autre composant de la motocyclette.

6. Procédé selon l'une des revendications précédentes, **caractérisé en ce que** le transmetteur de signal (3) génère des vibrations au niveau de la poignée des gaz, de la poignée de frein, des repose-pieds, de la selle, des gants de motard, de la combinaison de motard et/ou d'un casque.

7. Procédé selon l'une des revendications précédentes, **caractérisé en ce que** le transmetteur de signal (3) est activé par le biais d'une interface radio, par exemple par Bluetooth.

8. Procédé selon la revendication 3, **caractérisé en ce que** la durée prédéfinie pour l'écart maximal par rapport à différentes caractéristiques de la posture prédéfinie peut avoir différentes longueurs.

9. Contrôleur (1) destiné à mettre en oeuvre un procédé selon l'une des revendications précédentes, **caractérisé par** un algorithme (4) qui traite les signaux d'un système de détection (2) et constate si un conducteur de motocyclette adopte une posture prédéfinie, et qui active un transmetteur de signal (3) lorsqu'il est constaté que le conducteur de motocyclette s'écarte de la posture prédéfinie pendant plus longtemps qu'une durée prédéfinie, la durée prédéfinie étant dépendante d'une grandeur opérationnelle de la motocyclette, de données de trafic, de données météorologiques et/ou de données à propos du trajet à venir.
